# EUROPEAN PATENT APPLICATION

(11) **EP 4 002 556 A1**
(43) Date of publication of application: **25.05.2022**
(21) Application number: 20208483.6
(22) Date of filing: 18.11.2020
(51) Int. Cl.: H01M 12/06, H01M 50/574, H02J 7/00

(54) **DEVICE HAVING BUILT-IN METAL-AIR BATTERY**

(71) Applicant: Koninklijke Philips N.V., 5656 AG Eindhoven (NL)
(72) Inventor: DE BOER, Jan Harm, 5656 AE Eindhoven (NL)
(74) Representative: Philips Intellectual Property & Standards

(57) **Abstract**

The present invention relates to a device (10) powered by a built-in metal-air battery (12). In order to reduce the load of the built-in metal-air battery (12) before the device (10) is activated, a switch circuit (16) is provided for switching electronic units (14) on when the battery voltage is above a pre-defined voltage threshold.

## Description

### FIELD OF THE INVENTION

The present invention relates to a device powered by a built-in metal-air battery, and a method of operating the device.

### BACKGROUND OF THE INVENTION

Some devices (e.g. wearable sensors) are powered by a built-in metal-air battery. Metal-air batteries, such as zinc-air batteries, are batteries that become active when in contact with air. In the factory, the metal-air batteries are sealed with a removable seal. For example, when a zinc-air battery is sealed, the voltage on the clamps for two zinc-air cells in series is about 2 V. When the seal is removed, the voltage will rise to 2.6 to 2.8 V.

Low power electronics in general is designed to use minimal power when powered. Most electronics, when the supplied voltage is lower than minimal operating voltage, will draw more current than in idle, sleep or even active mode.

Accordingly, the built-in metal-air battery may be discharged already on the shelf before activation by breaking the air seal, therefore it should be electrically disconnected from the power consuming device electronics. It is common practice to use an on/off switch for disconnecting the metal-air battery from these electronics.

### SUMMARY OF THE INVENTION

There may be a need to reduce the load of a built-in metal-air battery of a device before the device is activated.

The object of the present invention is solved by the subject-matter of the independent claims, while further embodiments are incorporated in the dependent claims. It should be noted that the following described aspects of the invention apply both for the device and the method of operating the device.

According to a first aspect of the present invention, there is provided a device that comprises a built-in metal-air battery for supplying a battery voltage, one or more electronic units, and a switch circuit. The switch circuit is configured to connect the one or more electronic units to the built-in metal-air battery, when the supplied battery voltage is above a pre-defined voltage threshold. When the built-in metal-air battery is in a sealed condition, the switch circuit is configured to disconnect the sealed built-in metal-air battery from the one or more electronic units.

In other words, a device is proposed with a switch circuit for disconnecting a sealed built-in metal-air battery from the electronics units. In this way, when the built-in metal-air battery is in a sealed condition, the sealed battery is not loaded. Accordingly, the sealed built-in metal-air battery will not wear out. As a result, the device has a longer shelf life.

Once the air seal is removed, such as a sticker on the metal-air battery is removed, or a valve, or the like is opened, air is provided to the built-in metal-air battery. The battery voltage will rise above a pre-defined voltage threshold. In response to the voltage change, the switch circuit connects the electronic units to the built-in metal-air battery, thereby switching the electronic units on. Accordingly, no additional on/off switch or tab is needed for activating the device. As a result, no additional space for e.g. on/off switch or tab is required in a tiny housing. The absence of an on/off switch may reduce the manufacturing effort or cost. Additionally, the absence of an on/off switch may also protect the device against accidental switch-off. Further, it simplifies the operation of the device, as no additional on/off switch or tab is needed for activating the device.

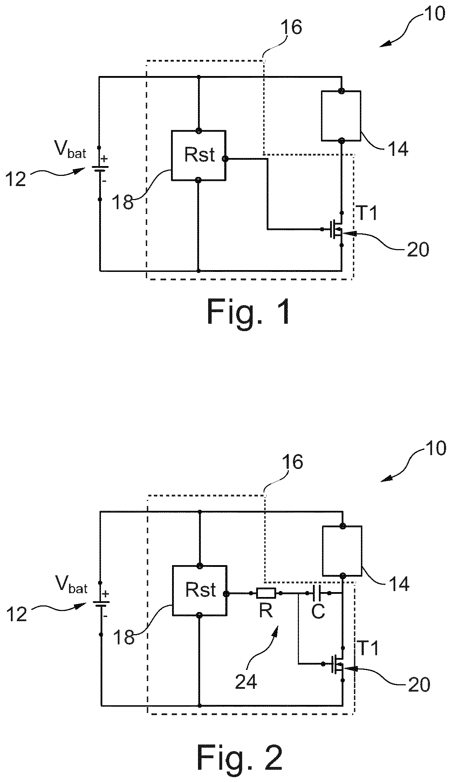

This will be explained hereafter and in particular with respect to the embodiment illustrated in Fig. 1.

According to an embodiment of the present invention, the switch circuit comprises a voltage measuring circuit and a switch. The voltage measuring circuit is configured to control the switch to connect the one or more electronic units to the built-in metal-air battery when the supplied battery voltage is greater than or equal to the pre-defined voltage threshold.

In an example, the voltage measuring circuit may be a voltage discriminating circuit.

In an example, the voltage measuring circuit could be a reset circuit, comparator circuit or even a switch that reacts above a specific voltage.

The term "switch" as used herein refers to an electrically controllable switch. The switch may be a transistor (e.g. a FET or MOSFET), a switch in chip (typically a complete circuit with several transistors), or a MEMS device operating as a switch.

According to an embodiment of the present invention, the device further comprises a further switch configured to enable the voltage measuring circuit to control the switch to connect the one or more electronic units to the built-in metal-air battery, when the supplied battery voltage drops below the pre-defined voltage threshold.

In this way, the one or more electronic units will keep working even when the battery voltage drops below the pre-defined voltage threshold.

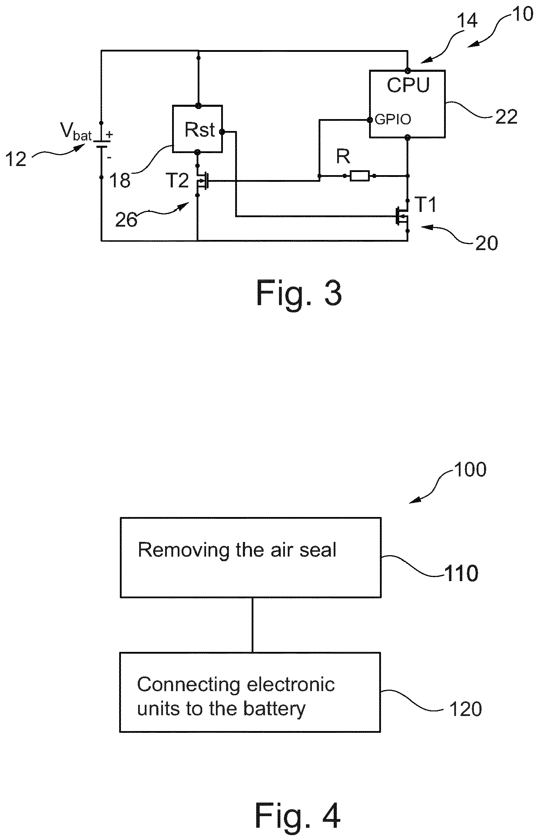

This will be explained hereafter and in particular with respect to the embodiment illustrated in Fig. 3.

According to an embodiment of the present invention, the one or more electronic units comprise a controller. The controller is configured to determine when to switch off the one or more electronic units when the supplied battery voltage is below the pre-defined voltage threshold.

The term "controller" is used generally to describe various apparatus relating to the operation of a stream probe apparatus, system, or method. A controller can be implemented in numerous ways (e.g., such as with dedicated hardware) to perform various functions discussed herein. A "processor" is one example of a controller, which employs one or more microprocessors that may be programmed using software (e.g., microcode) to perform various functions discussed herein. A controller may be implemented with or without employing a processor, and also may be implemented as a combination of dedicated hardware to perform some functions and a processor (e.g., one or more programmed microprocessors and associated circuitry) to perform other functions. Examples of controller components that may be employed in various embodiments of the present disclosure include, but are not limited to, conventional microprocessors, application specific integrated circuits (ASICs), and field-programmable gate arrays (FPGAs).

The controller may trigger an interrupt in order to force the one or more electronic units to switch off.

According to an embodiment of the present invention, the device further comprises a delay circuit configured to allow the switch circuit to perform a delayed connection, when the supplied battery voltage reaches the pre-defined voltage threshold.

When the battery voltage reaches the pre-defined voltage threshold, the output of the power reset circuit activates the switch. The switch will then start conducting at the same time, which may cause a very high current surge. Accordingly, the current may easily be a few amperes depending on the used components and thus too much for a small battery.

With the delay circuit, there is a time delay for the switch to start conducting. Therefore, the current peak may be reduced. In addition, the chance of a deep voltage dip due to over- or heavy loading the battery may also be reduced. This will be explained hereafter and in particular with respect to the embodiment illustrated in Fig. 2.

In an example, the delay circuit may comprise an RC delay element that creates a time delay by connecting a resistor and a capacitor.

According to an embodiment of the present invention, the metal-air battery comprises a zinc-air battery.

According to an embodiment of the present invention, the device is a sensor device.

According to an embodiment of the present invention, the device is a wearable sensor device.

According to an embodiment of the present invention, the device is a disposable device.

According to an embodiment of the present invention, the pre-defined voltage threshold is greater than a minimal operating voltage of the one or more electronic units.

By setting the pre-defined voltage threshold above the minimal operating voltage, the electronics is not able to draw current from the sealed battery.

The minimum operating voltage may vary according to the electronic unit(s) in the device. In an example, the minimum operation voltage for some electronics may be as low as 0.9 V. In other words, these electronics may start operating at 0.9 V. In another example, there are DC/DC converters that are able to start at even 0.5 V. In a further example, some CPUs may start at 1.1 V.

According to a second aspect of the present invention, there is provided a method of operating a device according to the first aspect, the method comprising:
a) removing an air seal that seals the built-in metal-air battery of the device;
   wherein the removal of the air seal causes the built-in metal-air battery to supply a battery voltage above a pre-defined voltage threshold; and
b) connecting, by a switch circuit, the one or more electronic units to the built-in metal-air battery, when the supplied battery voltage is greater than or equal to the pre-defined voltage threshold.

According to an embodiment of the present invention, step b) comprises the step of performing a delayed connection, when the supplied battery voltage reaches the pre-defined voltage threshold.

According to an embodiment of the present invention, the one or more electronic units comprise a controller. The method further comprises the step of determining, by the controller, when to switch off the one or more electronic units when the supplied battery voltage is below the re-defined voltage threshold.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

These and other aspects of the invention will be apparent from and elucidated with reference to the embodiment(s) described hereinafter.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the invention.
Fig. 1 is a schematic representation of a device, in accordance with an embodiment.
Fig. 2 is a schematic representation of a device, in accordance with another embodiment.
Fig. 3 is a schematic representation of a device, in accordance with a further embodiment.
Fig. 4 is a flowchart of a method, in accordance with an embodiment.

### DETAILED DESCRIPTION OF EMBODIMENTS

As previously indicated the present invention is related to a variety of devices including e.g. sensor devices, wearable sensor devices, disposable devices, etc. All these types of devices have in common that they are powered by a built-in metal-air battery. The built-in metal-air battery may be e. g. a lithium-air, sodium-air, potassium-air, zinc-air, magnesium-air, calcium-air, aluminum-air, iron-air, or silicon-air battery. Depending on the application, they may comprise one or more electronic units, such as sensing units, wireless transceiver units, signal processing units, etc.

Fig. 1 illustrates a simplified schematic diagram of an exemplary device 10.

In an example, the device 10 is a sensor device.

In an example, the device 10 is a wearable sensor device.

In an example, the device 10 is a disposable device, i.e. a device that is activated and after a period of time is disposed of. The disposable device may be e.g. a disposable sensor device, or a disposable wearable sensor device.

The device 10 comprises a built-in metal-air battery 12 for supplying a battery voltage, one or more electronic units 14, and a switch circuit 16 (block shown in dotted lines).

The built-in metal-air battery 12 is a battery that becomes active when in contact with air, for the air to reach the internals of the battery via small holes. The built-in metal-air battery 12 may be e.g. a lithium-air, sodium-air, potassium-air, zinc-air, magnesium-air, calcium-air, aluminium-air, iron-air, or silicon-air battery. In the factory, these holes are sealed with a removable seal, such as a sticker or a valve. When the batteries are sealed, the voltage on the clamps, e.g. for two zinc-air cells in series, is about 2 V, and when the seal is removed, the voltage will rise to 2.6 to 2.8 V. It will be appreciated that the built-in metal-air battery 12 may have a single cell, two cells in series, three cells in series, four cells in series, or more cells in series for generating a desired battery voltage.

Depending on the application, the one or more electronic units 14 may include e.g. a cardiac sensor for monitoring heart rate, a sensor for monitoring biomarkers from saliva or sweat, signal processing unit, wireless transceiver, etc.

The switch circuit 16 is configured to connect the one or more electronic units 14 to the built-in metal-air battery 12, when the supplied battery voltage is greater than or equal to a pre-defined voltage threshold. The pre-defined voltage threshold may be greater than or equal to a minimal operating voltage of the one or more electronic units such that when the built-in metal-air battery is in a sealed condition, the sealed built-in metal-air battery 12 is disconnected from the one or more electronic units 14.

For example, the switch circuit 16 may be in series with the one or more electronic units 14. The switch circuit 16 will switch the one or more electronic units 14 on, when the battery voltage is greater than or equal to the pre-defined voltage threshold. For example, the pre-defined voltage threshold may have a value of at least 2.1 V, such as at least 2.3 V, and may be in the range of 2.1 - 2.5 V, with two zinc-air cells in series.

The predefined voltage threshold may be preferably greater than or equal to a minimal operating voltage of the one or more electronic units 14. The minimum operating voltage may vary according to the electronic unit(s) in the device. In an example, the minimum operation voltage for some electronics may be as low as 0.9 V. In other words, these electronics may start operating at 0.9 V. In another example, there are DC/DC converters that are able to start at even 0.5 V. In a further example, some CPUs may start at 1.1 V. Depending on the applications, the one or more electronic units may comprise different components. Therefore, the minimum operation voltage may vary. By setting the pre-defined voltage threshold above the minimal operating voltage, the electronics is not able to draw current from the sealed battery. Accordingly, the battery has a longer shelf life.

In an example, the switch circuit 16 may comprise a voltage measuring circuit 18 and a switch 20. The voltage measuring circuit 18 is configured to control the switch 20 to connect the one or more electronic units to the built-in metal-air battery when the supplied battery voltage is greater than or equal to the pre-defined voltage threshold.

An example of the voltage measuring circuit 18 is illustrated in Fig. 1. In this example, the voltage measuring circuit 18 is a power reset circuit Rₛₜ. The power reset circuit may perform the following functions: asserting a reset signal whenever the battery voltage V_{bat} drops below the pre-defined voltage threshold and keeping it asserted until V_{bat} has risen greater than or equal to the pre-defined voltage threshold for a minimum period of time. Further examples of the voltage measuring circuit 18 may include, but are not limited to, a comparator circuit or even a switch that reacts above a specific voltage.

The switch 20 as used herein refers to an electrically controllable switch. In the example illustrated in Fig. 1, the switch 20 is a transistor T1, such as a FET or MOSFET. Further examples of the switch 20 may include, but are not limited to, switch in chip (typically a complete circuit with several transistors), or a MEMS device operating as a switch.

In the following, the operation of the device is described in detail in relation with a battery with two zinc-cells in series. Although the following detailed description is described with respect to a particular built-in metal-air battery for the purposes of illustration, anyone of ordinary skill in the art will appreciate that the device and method described above and below can be adapted to any other built-in metal air batteries, such as lithium-air, sodium-air, potassium-air, or magnesium-air battery, with a single cell, two cell in series, three cells in series, four cells in series or the like for providing a desired battery voltage. Accordingly, the following described examples are set forth without any loss of generality to, and without imposing limitations upon, the claimed invention.

In operation, when the battery voltage V_{bat} is lower than 1 V, the power reset circuit Rₛₜ (i.e. an example of the voltage measuring circuit 18) will keep the output low. Accordingly, the transistor T1 (i.e. an example of the switch 20) is off.

When the battery voltage V_{bat} rises to 1 V (voltage on the clamps for a sealed zinc-air battery), the power reset circuit Rₛₜ will internally activate, but its output will remain low. Accordingly, the transistor T1 will stay off (e.g. the FET has a threshold of ca. 1 V).

When the battery voltage V_{bat} rises to 2.3 V, which is larger than the pre-defined voltage threshold, the power reset circuit Rₛₜ will become active and the output will be driven high. Accordingly, the one or more electronic units 14 are powered with 2.3 V.

Accordingly, the switch circuit may prevent the battery from draining already on the shelf before activation by breaking the air seal, without the need for further "activation" activity, such as switching the device on with an on/off switch or removing a plastic tab.

In the example illustrated in Fig. 1, when the battery voltage V_{bat} reaches the pre-defined voltage threshold, the output of the power reset circuit Rₛₜ activates the switch 20 (e.g. the transistor T1). The switch 20 will then start conducting at the same time, which may cause a very high current surge, depending on the used components. This is caused by capacitors inside the circuit that are connected over the supply of the circuit, called bypass capacitors. Accordingly, the current may easily be a few amperes and it is too much for a small battery.

To reduce the current peak and to reduce the chance of a deep voltage dip at V_{bat} due to over- or heavy loading the battery, the time the switch starts conducting is preferably made longer. Towards this end, Fig. 2 illustrates a simplified schematic diagram of another exemplary device 10, which has a delay circuit 24. In this example, the delay circuit 24 comprises an RC delay element that has two additional components including a resistor R and a capacitor C.

In operation, when the V_{bat} reaches the pre-defined voltage threshold, the output of the power reset circuit Rₛₜ is low (e.g. 0 V). Since the switch 20 is off, the capacitor C will be charged up to V_{bat}.

When the power reset circuit Rₛₜ is switching on the switch 20, there is a small delay because the capacitor C needs to be discharged to allow the switch 20 to reach the pre-defined voltage threshold. The current is limited by the resistor R. When the switch 20 starts conducting, the voltage over the switch 20 will reduce. Since the capacitor C is fed back to the gate of the transistor T1, the driver for the transistor T1 to switch on will be reduced. The capacitor C can only be discharged via the resistor R and this takes time, during which the voltage over the switch 20 will reduce slowly and hence reduce the peak current.

Fig. 3 illustrates a simplified schematic diagram of a further exemplary device 10. In this example, the device 10 may be extended to allow the one or more electronic units 14 to continue working when the battery voltage V_{bat} is lower below the pre-defined voltage threshold.

The device may further comprise a further switch 26 configured to enable the voltage measuring circuit to control the switch to connect the one or more electronic units to the built-in metal-air battery, when the supplied battery voltage drops below the pre-defined voltage threshold.

In this example, the further switch 26 is a transistor T2. The transistors T1 and T2 may be both n-channel enhancement MOSFETS. In short, this means when the gate voltage is zero (compared to the bottom or source connection), the transistors T1 and T2 behave like an isolator and therefore no current flows. When the voltage of the gate becomes higher than a voltage threshold of the FET, the transistors T1 and T2 start conducting.

It is noted that the metal oxide of the MOSFET is an isolator and hence there is never a DC current inwards or outwards the gate, thereby keeping the current low. Additionally, the voltage threshold of the transistors T1 and T2 may be different from the voltage threshold determined by the power reset circuit Rₛₜ.

In operation, when the battery voltage V_{bat} is zero, nothing happens and the device 10 is idle.

When the battery voltage V_{bat} increases, the gate of the transistor T2 is pulled up via a resistor R making sure that the transistor T2 starts conducting. The resistor R may have a resistance value in the range of 1 to 50 Mohm.

When the transistor T2 conducts, the current will be limited by the power reset circuit Rₛₜ. The current is still very low (e.g. 100 nA) depending on the power reset circuit Rₛₜ. The gate of the transistor T1 will first be low, since the power reset circuit Rₛₜ will not drive the gate below 0.5 V. Above 0.5 V, the power reset circuit Rₛₜ will drive the gate of the transistor T1 low making sure that no current will flow through the one or more electronic units 14.

This situation will remain when the voltage gets higher until the battery voltage V_{bat} reaches the trigger level of the power reset circuit Rₛₜ. The battery voltage may be greater than or equal to the minimal operating voltage. Then, the power reset circuit Rₛₜ will send a high level on the gate of the transistor T1.

When the gate of the transistor T1 is greater than or equal to the pre-defined voltage threshold, the transistor T1 will start conducting and act as a switch connecting the one or more electronic units 14 to the minus connection of the built-in metal-air battery 12. The gate of the transistor T2 will now be lowered by the resistor R and the transistor T2 will stop conducting.

When the transistor T2 is not conducting, the voltage on all three pins of the power reset circuit Rₛₜ will be at the V_{bat} level and this will keep the transistor T1 conducting, even when the battery voltage drops below the pre-defined voltage threshold.

The one or more electronic units 14 may comprise a controller 22, such as a CPU illustrated in Fig. 3. The controller 22 is configured to determine when to switch off the one or more electronic units (not shown) when the supplied battery voltage is below the pre-defined voltage threshold. For example, the controller 22 may trigger an interrupt in order to force the one or more electronic units to switch off.

In the following, the operation of the controller is described in detail in relation with a CPU. Anyone of ordinary skill in the art will appreciate that the below-described operation can also be adapted to any other controllers, such as ASICs, FPGAs, or the like.

In operation, the CPU may be configured to monitor its supply voltage, i.e. the voltage of V_{bat}. The CPU can then determine when the battery voltage V_{bat} is below the pre-defined voltage threshold. The CPU will still be powered since the transistor T2 is switched off, as the voltage at the gate of the transistor T2 is connected to the minus of the built-in metal-air battery 12 via the resistor R and the transistor T1 is conducting. The CPU can switch the level of the gate to the plus of the built-in metal-air battery 12 by means of the GPIO (output pin of the CPU). The transistor T2 will then start conducting and connecting the power reset circuit Rₛₜ to the minus of the built-in metal-air battery 12. The power reset circuit Rₛₜ will start working and will measure the battery voltage V_{bat}. Since the battery voltage V_{bat} is lower than the pre-defined voltage threshold, the power reset circuit Rₛₜ will make his output low. A low voltage at the gate of the transistor T1 will make it stop conducting. Hence, the voltage over the CPU will fall to zero. The CPU is floating at the level of the battery voltage V_{bat}. The voltage of the GPIO will also be floating at the battery voltage V_{bat} and hence the transistor T2 will remain conducting. When the battery voltage V_{bat} is below the pre-defined voltage threshold, the transistor T2 is conducting and the transistor T1 is not conducting. Hence, all current that is flowing is determined by the power reset circuit Rₛₜ

Fig. 4 illustrates a flowchart of a method of operating the device 10.

The method 100 comprises the step 110, i.e. step a), of removing an air seal that seals the built-in metal-air battery 12 of the device 10. The removal of the air seal causes the built-in metal-air battery 12 to supply a battery voltage greater than or equal to the pre-defined voltage threshold. In the examples illustrated in Figs. 1 to 3, the removal of the air seal causes the built-in metal-air battery 12 to supply a battery voltage above 2.3 V with two zinc-air cells in series.

As the supplied battery voltage is greater than or equal to the pre-defined voltage threshold (e.g. 2.3 V in Figs. 1 and 2), the switch circuit 16 of the device 10 in step 120, i.e. step b), connects the one or more electronic units 14 to the built-in metal-air battery 12, thereby switching on the one or more electronic units 14.

Accordingly, if the built-in metal-air battery 12 is in a sealed condition, the built-in metal-air battery 12 is disconnected from the one or more electronic units 14 by the switch circuit 16. Accordingly, the built-in metal-air battery of the device is not loaded before the device is activated, thereby preventing the built-in metal-air battery from draining on the shelf. The built-in metal-air battery 12 thus has a longer shelf life.

If the air seal is removed from the built-in metal-air battery 12, the switch circuit 16 will connect the one or more electronic units 14 to the built-in metal-air battery 12. Accordingly, the built-in metal-air battery 12 is capable of powering the one or more electronic units 14. Accordingly, no separate on/off switch or additional tab is required for activating the device. This would mean no additional space for an on/off switch or an additional tab between the battery and battery contacts.

Optionally, step 120 may further comprise the step of performing a delayed connection, when the supplied battery voltage reaches the pre-defined voltage threshold. In other words, there is a time delay for the switch to start conducting. Therefore, the current peak may be reduced. In addition, the chance of a deep voltage dip due to over- or heavy loading the battery may also be reduced.

Optionally, the one or more electronic units may comprise a controller. The method may further comprise determining, by the controller, when to switch off the one or more electronic units when the supplied battery voltage is below the re-defined voltage threshold.

In this way, as explained with respect to the embodiment illustrated in Fig. 3, the device 10 may be extended to allow the one or more electronic units 14 to continue working when the battery voltage V_{bat} is lower below the pre-defined voltage threshold.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items.

In the claims, as well as in the specification above, all transitional phrases such as "comprising," "including," "having," and the like are to be understood to be open-ended, i.e., to mean including but not limited to.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

## Claims

1. A device (10), comprising:
- a built-in metal-air battery (12) for supplying a battery voltage;
- one or more electronic units (14); and
- a switch circuit (16);
wherein the switch circuit is configured to connect the one or more electronic units to the built-in metal-air battery, when the supplied battery voltage is greater than or equal to a pre-defined voltage threshold; and
wherein, when the built-in metal-air battery is in a sealed condition, the switch circuit is configured to disconnect the sealed built-in metal-air battery from the one or more electronic units.

2. Device according to claim 1,
wherein the switch circuit comprises:
- a voltage measuring circuit (18); and
- a switch (20);
wherein the voltage measuring circuit is configured to control the switch to connect the one or more electronic units to the built-in metal-air battery, when the supplied battery voltage is greater than or equal to the pre-defined voltage threshold.

3. Device according to claim 2, further comprising:
- a further switch (26) configured to enable the voltage measuring circuit to control the switch to connect the one or more electronic units to the built-in metal-air battery, when the supplied battery voltage drops below the pre-defined voltage threshold.

4. Device according to claim 3,
wherein the one or more electronic units comprise a controller (22); and
wherein the controller is configured to determine when to switch off the one or more electronic units, when the supplied battery voltage is below the pre-defined voltage threshold.

5. Device according to any one of the preceding claims, further comprising:
- a delay circuit (24) configured to allow the switch circuit to perform a delayed connection, when the supplied battery voltage reaches the pre-defined voltage threshold.

6. Device according to any one of the preceding claims,
wherein the metal-air battery comprises a zinc-air battery.

7. Device according to any one of the preceding claims,
wherein the device is a sensor device.

8. Device according to claim 7,
wherein the device is a wearable sensor device.

9. Device according to any one of the preceding claims,
wherein the device is a disposable device.

10. Device according to any one of the preceding claims,
wherein the pre-defined voltage threshold is greater than a minimal operating voltage of the one or more electronic units.

11. A method (100) of operating a device according to any one of the preceding claims, the method comprising:
a) removing (110) an air seal that seals the built-in metal-air battery of the device;
wherein the removal of the air seal causes the built-in metal-air battery to supply a battery voltage above a pre-defined voltage threshold; and
b) connecting (120), by a switch circuit, the one or more electronic units to the built-in metal-air battery, when the supplied battery voltage is greater than or equal to the pre-defined voltage threshold.

12. Method according to claim 11,
wherein step b) comprises the step of performing a delayed connection, when the supplied battery voltage reaches the pre-defined voltage threshold.

13. Method according to claim 11 or 12,
wherein the one or more electronic units comprise a controller; and
wherein the method further comprises determining, by the controller, when to switch off the one or more electronic units, when the supplied battery voltage is below the re-defined voltage threshold.
